# EUROPEAN PATENT SPECIFICATION

(11) **EP 4 621 591 B1**
(45) Date of publication and mention of the grant of the patent: **02.12.2026**
(21) Application number: 23893480.6
(22) Date of filing: 16.10.2023
(51) Int. Cl.: G06F 16/27

(54) **FEATURE SYNCHRONIZATION METHOD AND APPARATUS, AND COMPUTER DEVICE, STORAGE MEDIUM AND PROGRAM PRODUCT**
VERFAHREN UND VORRICHTUNG ZUR MERKMALSSYNCHRONISIERUNG SOWIE COMPUTERVORRICHTUNG, SPEICHERMEDIUM UND PROGRAMMPRODUKT
PROCÉDÉ ET APPAREIL DE SYNCHRONISATION DE CARACTÉRISTIQUES, ET DISPOSITIF INFORMATIQUE, SUPPORT DE STOCKAGE ET PRODUIT PROGRAMME

(30) Priority: 22.11.2022 CN 202211465861
(43) Date of publication of application: 24.09.2025
(73) Proprietor: Tencent Technology (Shenzhen) Company Limited, Shenzhen, Guangdong 518057 (CN)
(72) Inventor: ZHANG, Zhenhong, Shenzhen, Guangdong 518057 (CN)
(74) Representative: Nederlandsch Octrooibureau
(86) International application number: PCT/CN2023/124708
(87) International publication number: WO 2024/109388

(56) References cited:
- CN-A- 109 814 908
- CN-A- 110 366 142
- CN-A- 110 366 142
- CN-A- 112 418 863
- CN-A- 114 722 051
- CN-A- 114 722 051
- US-A1- 2018 136 929
- AHMED TAUHEED ET AL: "Hash-based space partitioning approach to iris biometric data indexing", EXPERT SYSTEMS WITH APPLICATIONS, vol. 134, 21 May 2019 (2019-05-21), pages 1 - 13, XP085723569, ISSN: 0957-4174, DOI: 10.1016/J.ESWA.2019.05.026

## Description

### RELATED APPLICATION

This application claims priority to Chinese Patent Application No. 202211465861.8, filed on November 22, 2022 and entitled "FEATURE SYNCHRONIZATION METHOD AND APPARATUS, SERVER, STORAGE MEDIUM, AND PROGRAM PRODUCT", which is incorporated herein by reference in its entirety.

### FIELD OF THE TECHNOLOGY

Embodiments of this application relate to the field of computer technologies, and in particular, to a feature synchronization method and apparatus, a computer device, a storage medium, and a program product.

### BACKGROUND OF THE DISCLOSURE

With the development of computer technologies, an iris recognition technology emerges. According to the iris recognition technology, identity verification can be performed based on iris features in eyes.

In the related art, a virtual reality (VR) device locally obtains the iris feature, and initiates a feature synchronization request. A computer device forwards the feature synchronization request to an iris feature library in a cloud for retrieval. After the retrieval is completed, the iris feature library returns, to the VR device for feature synchronization, an iris feature that needs to be delivered.

However, the VR device may generate a large quantity of feature synchronization requests simultaneously, resulting in high pressure on the iris feature library, a slow speed of delivering the iris feature, and ultimately, a slow speed of the feature synchronization. CN114722051A (TENCENT TECH SHENZHEN CO LTD), "Hash-based space partitioning approach to iris biometric data indexing" (AHMED TAUHEED ET AL) and CN110366142A (GM GLOBAL TECH OPERATIONS LLC) are relevant prior art documents.

### SUMMARY

According to various embodiments provided in this application, a feature synchronization method and apparatus, a computer device, a storage medium, and a program product are provided.

According to one aspect, this application provides a feature synchronization method, performed by a computer device, the computer device being provided with a first filter and an iris feature library, and including:
receiving a feature synchronization request carrying an iris feature and a first version information of the iris feature, the first version information representing a first version of the iris feature;
determining, through the first filter and based on the iris feature and the first version information, a first position in the first filter, a value at the first position being configured to represent whether an updated version of the iris feature exists in the iris feature library;
accessing the iris feature library through the first filter when the value at the first position represents that the updated version of the iris feature exists in the iris feature library, and obtaining the updated version of the iris feature through the iris feature library; and
transmitting the updated version of the iris feature to a request transmitter of the feature synchronization request, to cause the request transmitter to store the updated version of the iris feature.

According to another aspect, this application further provides a feature synchronization apparatus, the apparatus including:
a receiving module, configured to receive a feature synchronization request carrying an iris feature and a first version information of the iris feature, the first version information representing a first version of the iris feature;
a processing module, configured to determine, through the first filter and based on the iris feature and the first version information, a first position in the first filter, a value at the first position being configured to represent whether an updated version of the iris feature exists in the iris feature library;
an obtaining module, configured to access iris feature library through the first filter when the value at the first position represents that the updated version of the iris feature exists in the iris feature library, and obtain the updated version of the iris feature through the iris feature library; and
a delivery module, configured to transmit the updated version of the iris feature to a request transmitter of the feature synchronization request, to cause the request transmitter to store the updated version of the iris feature.

According to another aspect, this application further provides a computer device, including a processor and a memory, the memory having computer-readable instructions stored therein, when executed by the processor, the computer-readable instructions performing operations of the method embodiments of this application.

According to another aspect, this application further provides a computer-readable storage medium, the computer-readable storage medium having computer-readable instructions stored therein, when executed by a processor, the computer-readable instructions performing operations of the method embodiments of this application.

According to another aspect, this application further provides a computer program product, the computer program product including computer-readable instructions, when executed by a processor, the computer-readable instructions performing operations of the method embodiments of this application.

Details of one or more embodiments of this application are described in the accompanying drawings and the descriptions below. Other features and advantages of this application are apparent from the descriptions, drawings and claims.

### BRIEF DESCRIPTION OF THE DRAWINGS

To describe the technical solutions in embodiments of this application or the conventional technologies more clearly, the following briefly describes the accompanying drawings required for describing the embodiments or the conventional technologies. It is cleared that, the accompanying drawings in the following descriptions show only some embodiments of this application, and a person of ordinary skill in the art may still derive other drawings from the disclosed accompanying drawings without creative efforts.
FIG. 1 is a block diagram of a structure of a computer system according to an exemplary embodiment.
FIG. 2 is a schematic diagram of a feature synchronization method according to an exemplary embodiment.
FIG. 3 is a flowchart of a feature synchronization method according to an exemplary embodiment.
FIG. 4 is a flowchart of a feature synchronization method according to an exemplary embodiment.
FIG. 5 is a flowchart of a feature synchronization method according to an exemplary embodiment.
FIG. 6 is a flowchart of a feature synchronization method according to an exemplary embodiment.
FIG. 7 is a schematic diagram of a feature synchronization method according to an exemplary embodiment.
FIG. 8 is a flowchart of a feature synchronization method according to an exemplary embodiment.
FIG. 9 is a flowchart of a feature synchronization method according to an exemplary embodiment.
FIG. 10 is a flowchart of a feature synchronization method according to an exemplary embodiment.
FIG. 11 is a flowchart of a feature synchronization method according to an exemplary embodiment.
FIG. 12 is a schematic diagram of a feature synchronization method according to an exemplary embodiment.
FIG. 13 is a schematic diagram of a feature synchronization method according to an exemplary embodiment.
FIG. 14 is a schematic diagram of a feature synchronization method according to an exemplary embodiment.
FIG. 15 is a block diagram of a structure of a feature synchronization apparatus according to an exemplary embodiment.
FIG. 16 is a block diagram of a structure of a computer device according to an exemplary embodiment.

### DESCRIPTION OF EMBODIMENTS

The following clearly and completely describes the technical solutions in the embodiments of this application with reference to the accompanying drawings in the embodiments of this application. It is clear that the described embodiments are only some of the embodiments of this application rather than all of the embodiments.

The terms used in this application are merely for describing specific embodiments, but are not intended to limit this application. The terms "a", "an", and "the" of singular forms used in this application and the appended claims are also intended to include a plurality of forms, unless otherwise specified in the context clearly. The term "and/or" used in this specification refers to and includes any or all possible combinations of one or more associated listed items.

Although the terms first, second, and the like may be used in this application to describe various information, the information is not limited to the terms. These terms are merely used to distinguish information of the same time. For example, within the scope of this application, a first parameter may also be referred to as a second parameter, and similarly, the second parameter may also be referred to as the first parameter. Depending on a context, the term "if" as used herein may be interpreted as "when..." or "upon..." or "in response to determining".

In this application, a prompt interface, a pop-up window, or voice prompt information may be displayed before and during the collection of the relevant data (for example, an iris feature) of the user. The prompt interface, the pop-up window, or the voice prompt information is configured for prompting the user that the relevant data of the user is currently being collected. In this application, only after a confirmation operation performed by the user on the prompt interface or the pop-up window is obtained, the relevant operation of obtaining the relevant data of the user starts to be performed. Otherwise (that is, when the confirmation operation performed by the user on the prompt interface or the pop-up window is not obtained), the relevant operation of obtaining the relevant data of the user ends, that is, the relevant data of the user is not obtained. In other words, all user-related data collected in this application is collected with consent and authorization of the user, the collection, use, and processing of the user-related data need to comply with relevant laws, regulations, and standards of relevant countries and regions.

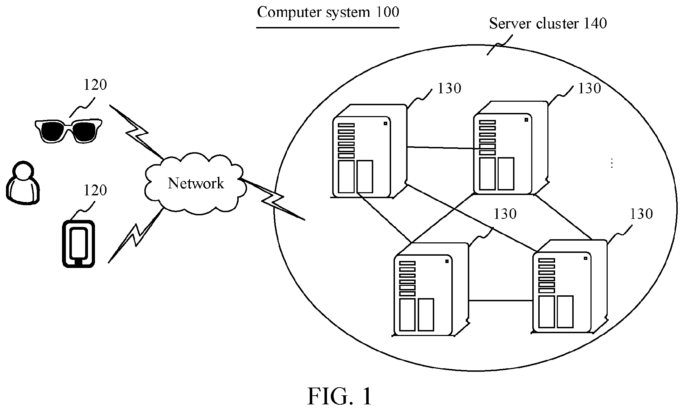

FIG. 1 is a block diagram of a structure of a computer system according to an exemplary embodiment of this application. The computer system may be implemented as a system architecture of a feature synchronization method. The computer system 100 includes a terminal 120 and a server cluster 140.

The terminal 120 may be an electronic device such as a mobile phone, a tablet computer, an in-vehicle terminal (vehicle computer), a wearable device, a personal computer (PC), an unmanned reservation terminal, a virtual reality (VR) device, a binocular iris collector, a mobile iris collection identifier, or an iris recognition collector. A client running a target application program may be installed in the terminal 120. The target application program may be a feature synchronization application for an iris feature, or another application provided with a feature map synchronization function for the iris feature. This is not limited in this application. In addition, a form of the target application is not limited in this application, and includes but is not limited to an application (APP), a mini program, and the like that are installed in the terminal 120, or may be in a form of a web page.

The server cluster 140 includes at least two servers 130. The server cluster or the distributed system may be formed by a plurality of independent physical servers 130. The server cluster or the distributed system may be formed by a cloud server 130 that provides a cloud computing service, a cloud database, cloud computing, a cloud function, cloud storage, a network service, cloud communication, a middleware service, a domain name service, a security service, a content delivery network (CDN), big data, an artificial intelligence platform, and other basic cloud computing services. The server cluster or the distributed system may be formed by a plurality of physical servers 130 and cloud servers 130 jointly. The server cluster 140 may be a background server cluster of the foregoing target application, and is configured to provide background services for clients of the target application.

A cloud technology (cloud technology) is a hosting technology that unifies a series of resources such as hardware, software, and a network in a wide area network or a local area network, to implement data computing, storage, processing, and sharing. A general term for a network technology, an information technology, an integration technology, a management platform technology, and an application technology that are applied based on a cloud computing business model. The cloud technology can form resource pools and be used on demand. A cloud computing technology is becoming an important support. A background service of a technical network system needs a large quantity of computing and storage resources, such as a video website, an image website, and more portal websites. With the development and application of the Internet industry, each item may have identification flag and needs to be transmitted to the background system for logic processing. Data of different levels is processed separately. Various industry data needs powerful system support, and this be implemented only through cloud computing.

In some embodiments, the servers in the server cluster 140 may also be implemented as nodes in a blockchain system. Blockchain is a new application mode of a computer technology such as distributed data storage, point-to-point transmission, consensus mechanism, and an encryption algorithm. The blockchain is essentially a decentralized database, and is a string of a data block generated in a cryptographic manner. Each data block contains information about a batch of network transactions, which is used to verify validity of the information (anti-counterfeiting) and generate a next block. The blockchain may include a blockchain underlying platform, a platform product service layer, and an application service layer.

The terminal 120 and the server cluster 140 may communicate through a network, such as a wired or wireless network. A plurality of servers 130 in the server cluster 140 may also communicate with each other through the network, such as the wired or wireless network.

In the feature synchronization method provided in the embodiments of this application, operations may be performed by each server 130 in the server cluster 140. A solution implementation environment shown in FIG. 1 is used as an example. The feature synchronization method may be performed by the server 130 in the server cluster 140, or may be performed by the terminal 120 and the server 130 in the server cluster 140 in cooperation with each other. This is not limited in this application.

A person skilled in the art may learn that there may be more or fewer terminals 120. For example, there may be only one terminal 120, or there may be dozens, hundreds, or more of terminals 120 A quantity and a device type of the terminal are not limited in the embodiments of this application.

The embodiments of this application relate to a computer vision technology. The computer vision (CV) technology is a science that studies how to make a machine "see". Further, the computer vision technology refers to using a camera and a computer to replace human eyes to perform machine vision such as recognition and measurement on a target, and further perform graphics processing, so that the computer processes an image that is more suitable for human eyes, to observe or transmit the image to an instrument for detection. As a scientific discipline, theories and technologies related to a computer vision research attempt to establish an artificial intelligence system that can obtain information from an image or multi-dimensional data. The computer vision technologies generally include technologies such as image processing, image recognition, image semantic understanding, image retrieval, optical character recognition (OCR), video processing, video semantic understanding, video content/behavioral recognition, three-dimensional object reconstruction, a 3D technology, virtual reality, augmented reality, simultaneous positioning, and map construction, and further include common biometric recognition technologies such as face recognition, fingerprint recognition, and iris recognition.

The embodiments of this application may be applied to a scenario of the iris feature recognition of a virtual reality device, and may also be applied to various scenarios in which biometric feature recognition still needs to be performed in an offline state, for example, a scenario of feature recognition of a fingerprint feature and a human face feature of a personal terminal in the offline state. The feature synchronization method provided in the embodiments of this application may be applied to feature synchronization of an iris feature of the virtual reality device. In some other embodiments, the feature synchronization method provided in the embodiments of this application may also be applied to feature synchronization of the fingerprint feature and the human face feature of the personal terminal. The following embodiments of this application are described by using feature synchronization of the iris feature of the virtual reality device as an example.

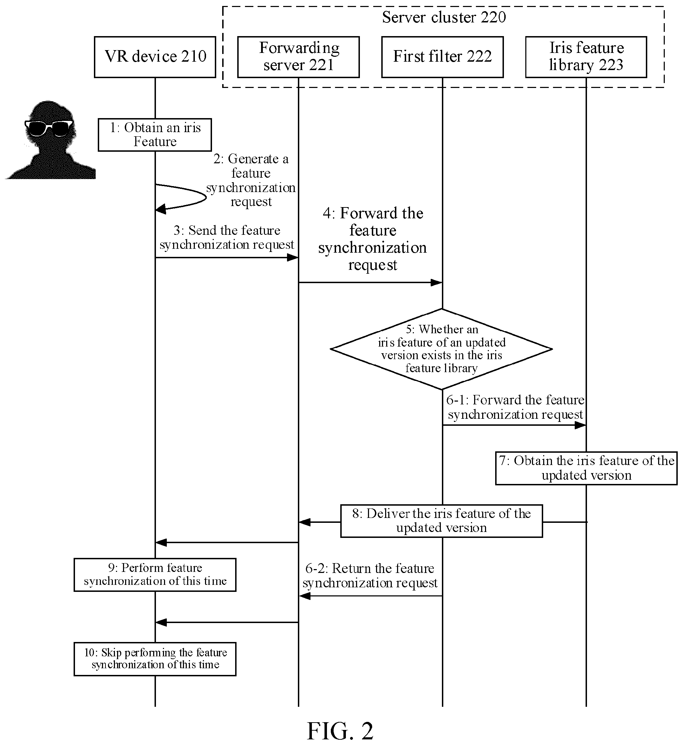

FIG. 2 is a schematic diagram of a feature synchronization method according to an exemplary embodiment of this application.

This embodiment relates to a VR device 210 and a server cluster 220. A first filter 222 and an iris feature library 223 are disposed in the server cluster 220. In some embodiments, a forwarding server 221 is further disposed in the server cluster 220. The forwarding server 221, the first filter 222, and the iris feature library 223 may be deployed in different physical servers, or the iris feature library 223 may be deployed in a cloud server. The feature synchronization method in this embodiment includes the following operations.

The VR device 210 obtains an iris feature, and generates a feature synchronization request. The feature synchronization request carries the iris feature and a first version information of the iris feature.

The VR device 210 sends the feature synchronization request to the forwarding server 221.

The forwarding server 221 receives the feature synchronization request, and forwards the feature synchronization request to the first filter 222.

The first filter 222 determines, based on the iris feature and the first version information, a first position corresponding to the feature synchronization request in the first filter 222, a value at the first position being configured for representing whether the iris feature has an iris feature of an updated version in the iris feature library 223.

When the first filter 222 determines that the iris feature of the updated version exists in the iris feature library, the first filter 222 forwards the feature synchronization request to the iris feature library 223, to access the iris feature library 223.

The iris feature library 223 obtains the iris feature of the updated version, and delivers the iris feature of the updated version to the forwarding server 221 in a form of a data packet.

The forwarding server 221 delivers the iris feature of the updated version to the VR device 210.

After receiving the iris feature of the updated version, the VR device 210 performs feature synchronization of this time on the iris feature, and stores the iris feature of the updated version.

When the first filter 222 determines that the iris feature of the updated version does not exist in the iris feature library, the first filter 222 returns the feature synchronization request to the VR device 210.

After receiving the returned feature synchronization request, the VR device 210 does not perform feature synchronization of this time on the iris feature.

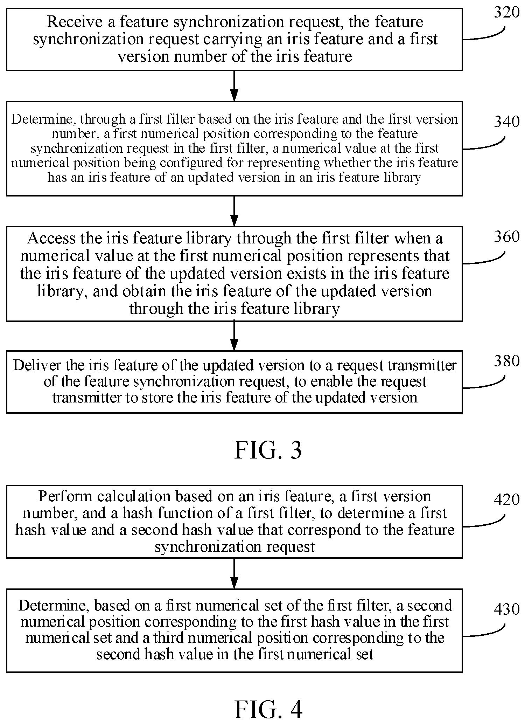

FIG. 3 is a flowchart of a feature synchronization method according to an exemplary embodiment of this application. Descriptions are provided by using an example in which the method is applied to the servers 130 in the server cluster 140 shown in FIG. 1. The method includes the following operations.

Operation 320: Receive a feature synchronization request carrying an iris feature and a first version information of the iris feature, the first version information representing a first version of the iris feature. In embodiments of the present application, operation 320 can include following steps: Receive a feature synchronization request, the feature synchronization request carrying an iris feature and a first version number of the iris feature.

The feature synchronization request is a request generated and sent by a local virtual reality device and configured for performing feature synchronization on a local iris feature.

Feature comparison may be divided into local feature comparison and cloud feature comparison. The feature synchronization refers to a process of delivering, when the local feature comparison is to be performed, an iris feature that expects to participate in comparison in the cloud to the local virtual reality device and storing the iris feature locally.

The iris feature is a biometric feature, and is a numerical vector configured for identifying irises in eyes. The iris feature may also be referred to as an iris feature that is expected to be updated. In embodiments of present application, the first version information can represent a first version of the iris feature. In embodiments of present application, different version information of the iris feature can represent different versions of the iris feature. In embodiments of present application, different versions of the iris feature can include different feature parameter values of the iris feature, each version of the iris feature being obtained through one obtaining process based on a virtual reality device. For example, the virtual reality device can obtain one version of the iris feature through one obtaining process, and the two versions of the iris feature obtained through two obtaining processes can be the same version of the iris feature, or can be different versions of the iris feature.

For example, the iris feature is obtained based on a virtual reality device, and the feature synchronization request is generated based on the virtual reality device. The feature synchronization request carries the iris feature and the first version information of the iris feature.

In some embodiments, the first version information can be represented by using a combination of one or more of letters, numbers, and characters. In embodiments of present application, the first version information can be represented by using numbers, i.e., the first version information can be a first version number.

For example, the feature synchronization request is sent based on the virtual reality device.

In some embodiments, a forwarding server is further disposed in the server. The forwarding server is a server configured to implement a function such as request forwarding or data forwarding.

In some embodiments, the feature synchronization request is sent to the forwarding server based on the virtual reality device. The feature synchronization request is received based on the forwarding server.

Operation 340: Determine, through the first filter and based on the iris feature and the first version information, a first position in the first filter, a value at the first position being configured to represent whether an updated version of the iris feature exists in the iris feature library. In embodiments of the present application, operation 340 can include following steps: Determine, through the first filter based on the iris feature and the first version number, a first numerical position corresponding to the feature synchronization request in the first filter, a numerical value at the first numerical position being configured for representing whether the iris feature has an iris feature of an updated version in the iris feature library.

The first filter is a component configured to implement screening, interception, and filtering of the feature synchronization request, and storing of a flag bit corresponding to the iris feature. The first filter may be deployed in the server.

The first position is determined by performing calculation on the iris feature and the first version information of the iris feature in the feature synchronization request, and is a position corresponding to the iris feature and the first version information of the iris feature in a first numerical set in the first filter. The first position in the first filter may also be referred to as a flag bit in the first filter. The value at the first position is configured for representing whether the iris feature has the iris feature of the updated version in the iris feature library.

The iris feature library is a database configured for storing the iris feature, and may be deployed in a cloud server.

In some embodiments, the feature synchronization request is received through the first filter. In some other embodiments, the feature synchronization request is forwarded based on the forwarding server. The forwarded feature synchronization request is received through the first filter.

In some embodiments, the first filter is implemented based on a Bloom filter. The Bloom filter is actually a binary vector and a series of random mapping functions. The bloom filter may determine whether an element exists based on a probability. Therefore, there is a specific error rate. If a Contains () operation of the bloom filter returns true, it indicates that the element may exist in a set, and if the Contains () operation returns false, it indicates that the element definitely does not exist in the set. The Bloom filter is suitable for a scenario in which misjudgment of whether the element is in the set can be tolerated, such as a caching scenario. Contains is a string processing function.

In some embodiments, the iris feature and the first version information of the iris feature in the feature synchronization request are packed, and calculation is performed through a hash function in the first filter, to determine the first position.

In some embodiments, the first numerical set of the first filter includes a plurality of positions, and there are one or more first positions corresponding to the feature synchronization request. Feature synchronization requests with same content correspond to a same position in the first numerical set of the first filter are the same. In other words, the feature synchronization request with the same content correspond to a same first position in the first filter.

For example, the first numerical set of the first filter includes four positions, which are a position 1, a position 2, a position 3, and a position 4 respectively. When the feature synchronization request corresponds to one first position, the first position corresponding to the feature synchronization request may be the position 3. When the feature synchronization request corresponds to a plurality of first positions, the first positions corresponding to the feature synchronization request may be the position 1, the position 3, and the position 4.

In some embodiments, the value at the first position is configured for representing whether the iris feature has the iris feature of the updated version in the iris feature library.

In some embodiments, when the value at the first position is a preset value, it indicates that the first position corresponding to the iris feature and the first version information in the first numerical set of the first filter is occupied, and it indicates that the iris feature may have the iris feature of the updated version in the iris feature library. The preset value may be configured based on an actual application scenario. For example, the preset value may be 1.

In some other embodiments, when the value at the first position is 0 or null, it indicates that the iris feature does not have the iris feature of the updated version in the iris feature library. The iris feature is a feature of the updated version, and the iris feature needs to be stored in the iris feature library, in other words, the iris feature does not participate in feature synchronization of this time, but feature upgrading is performed on the iris feature. In some other embodiments, when the value at the first position is 0 or null, it may alternatively indicate that the virtual reality device does not enable the feature synchronization.

For example, the first numerical set of the first filter includes four positions, which are a position 1, a position 2, a position 3, and a position 4 respectively. When the feature synchronization request corresponds to one first position, it is assumed that the first position corresponding to the feature synchronization request is the position 3. When a value at the position 3 is 1, it indicates that the position 3 is occupied, and it indicates that the iris feature may have the iris feature of the updated version in the iris feature library. When the value at the position 3 is 0 or null, it indicates that the iris feature is the iris feature of the updated version, and the iris feature needs to be stored in the iris feature library.

For example, when the feature synchronization request corresponds to a plurality of first positions, it is assumed that the first positions corresponding to the feature synchronization request are the position 1, the position 3, and the position 4. When values at the positions 1, the position 3, and the position 4 are all 1, it indicates that the position 1, the position 3, and the position 4 are occupied, and it indicates that the iris feature may have the iris feature of the updated version in the iris feature library. When one or more of the values at the positions 1, the position 3, and the position 4 is 0 or null, it indicates that the iris feature is the iris feature of the updated version, and the iris feature needs to be stored in the iris feature library.

Operation 360: Access the iris feature library through the first filter when the value at the first position represents that the updated version of the iris feature exists in the iris feature library, and obtain the updated version of the iris feature through the iris feature library. In embodiments of the present application, operation 360 can include following steps: Access the iris feature library through the first filter when the numerical value at the first numerical position represents that the iris feature of the updated version exists in the iris feature library, and obtain the iris feature of the updated version through the iris feature library.

In some embodiments, when it is determined, through the first filter, that the iris feature of the updated version exists in the iris feature library, the iris feature library is accessed through the first filter.

For example, when the value at the first position represents that the iris feature of the updated version exists in the iris feature library, the feature synchronization request is forwarded to the iris feature library through the first filter, to access the iris feature library.

In some embodiments, the iris feature of the updated version stored in the iris feature library is obtained through the iris feature library for delivery.

For example, when the value at the first position represents that the iris feature of the updated version does not exist in the iris feature library, the feature synchronization request is returned through the first filter. In some embodiments, that the iris feature of the updated version does not exist may be that the iris feature is the iris feature of the updated version, or may be that the obtained iris feature is an error feature or a useless feature.

Operation 380: Transmit the updated version of the iris feature to a request transmitter of the feature synchronization request, to cause the request transmitter to store the updated version of the iris feature. In embodiments of the present application, operation 380 can include following steps: delivering the iris feature of the updated version to a request transmitter of the feature synchronization request, to enable the request transmitter to store the iris feature of the updated version.

In some embodiments, after the iris feature of the updated version is obtained, the iris feature of the updated version is delivered in a form of a data packet based on the iris feature library, and feature synchronization of the iris feature is performed by using the iris feature of the updated version.

In some embodiments, the iris feature of the updated version is delivered to the request transmitter of the feature synchronization request based on the iris feature library, to enable the request transmitter to store the iris feature of the updated version. The request transmitter may be the virtual reality device. In some other embodiments, the iris feature of the updated version is delivered to the forwarding server based on the iris feature library. The iris feature of the updated version is delivered to the virtual reality device based on the forwarding server. The iris feature of the updated version is configured for performing feature synchronization of the iris feature. In other words, the virtual reality device locally stores the iris feature of the updated version. In embodiments of present application, after receiving the updated version of the iris feature, the virtual reality device can replace the locally stored iris feature (i.e., the first version of the iris feature, the first version is indicated by the first version information) with the updated version of the iris feature.

In conclusion, the first filter is designed based on the feature synchronization method provided in this embodiment of this application. It can be determined, based on the first filter, whether a large quantity of iris features have the iris feature of the updated versions in the iris feature library. When the iris feature of the updated version exists, the iris feature library is further accessed. Therefore, request expenditures of the iris feature library can be reduced. In addition, in the first filter, feature determining is performed based on the first position corresponding to the feature synchronization request in the first filter. This avoids a problem of an excessively large machine memory requirement caused by loading all the iris features into an internal memory of the first filter. Therefore, the solution of this embodiment of this application is used to reduce direct access to the iris feature library by a large quantity of feature synchronization requests, reduce processing costs of the iris feature library, avoid a situation in which the feature synchronization request responds slowly, and increase a speed at which the iris feature library delivers the iris feature. Therefore, a speed and efficiency of the feature synchronization are improved.

In some embodiments, FIG. 4 is a flowchart of a feature synchronization method according to an exemplary embodiment of this application. Operation 340 may include the following operations.

Operation 420: Perform calculation based on the iris feature, the first version information, and the hash function of the first filter, to determine a first hash value and a second hash value that correspond to the feature synchronization request.

In some embodiments, the iris feature and the first version information of the iris feature are packaged, and are represented as [iris feature + first version information]. Calculation is performed based on the [iris feature + first version information] and the hash function of the first filter, to determine two types of hash values corresponding to the feature synchronization request, which are referred to as the first hash value and the second hash value respectively.

The first hash value is calculated based on the [iris feature + first version information] and the hash function of the first filter. The first hash value is configured for determining a second position, and the second position is configured for representing whether the iris feature has the iris feature of the updated version in the iris feature library.

The second hash value is calculated based on [iris feature + second version information of the updated version] and the hash function of the first filter. The second hash value is configured for determining a third position, and the third position is configured for representing whether the iris feature of the updated version corresponding to the iris feature exists in the iris feature library.

Operation 430: Determine, based on the first numerical set of the first filter, the second position corresponding to the first hash value in the first numerical set and the third position corresponding to the second hash value in the first numerical set.

In some embodiments, the second position corresponding to the first hash value in the first numerical set is determined based on the first numerical set of the first filter. The third position corresponding to the second hash value in the first numerical set is determined based on the first numerical set of the first filter.

In some embodiments, the calculation of the first hash value and the second hash value may be performed simultaneously, and the determining of the second position and the third position may be performed simultaneously. This is not limited in this embodiment.

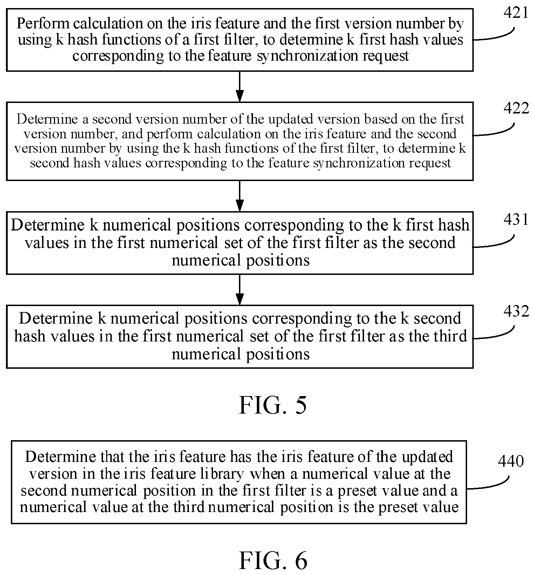

For example, FIG. 5 is a flowchart of a feature synchronization method according to an exemplary embodiment of this application. Operation 420 may be implemented as the following operations.

Operation 421: Perform calculation on the iris feature and the first version information by using k hash functions of the first filter, to determine k first hash values corresponding to the feature synchronization request, where k is an integer greater than 0.

In some embodiments, there are k hash functions of the first filter, k being an integer greater than 0. Calculation is performed on the iris feature and the first version information by using the k hash functions of the first filter, to determine the k first hash values corresponding to the feature synchronization request. A quantity of first hash values is the same as a quantity of hash functions of the first filter.

Operation 422: Determine the second version information of the updated version based on the first version information, and perform calculation on the iris feature and the second version information by using the k hash functions of the first filter, to determine k second hash values corresponding to the feature synchronization request, where k is an integer greater than 0. A quantity of second hash values is the same as the quantity of hash functions of the first filter.

In some embodiments, the second version information of the updated version is determined based on the first version information, and calculation is performed on the iris feature and the second version information by using the k hash functions of the first filter, to determine the k second hash values corresponding to the feature synchronization request.

In some embodiments, the determining the second version information of the updated version based on the first version information includes:
obtaining a version information interval configured for updating a version information, superimposing the version information interval and the first version information, and determining the second version information of the updated version.

The version information interval refers to an interval between version information that is configured for updating the version information, and may be specifically an integer greater than 0.

In some other embodiments, based on that the version information interval configured for updating the version information is obtained, the second version information of the updated version may be determined by superimposing the version information interval and the first version information, that is, the second version information=the first version information + the version information interval. For example, the version information interval may be 1, and the second version information=the first version information + 1.

In some other embodiments, the version information interval is determined based on an update status of a version information each time the virtual reality device collects an iris feature. For example, the version information interval may be 2, 4, or n, and the second version information may be the first version information + 2, the first version information + 4, or the first version information + n. For example, when the virtual reality device collects an iris feature this time, a version information of the iris feature is 01. When the virtual reality device collects an iris feature next time, a version information of the iris feature is 05. In this case, the version information interval after each collection is 4, and the second version information=the first version information + 4.

For example, FIG. 5 is a flowchart of a feature synchronization method according to an exemplary embodiment of this application. Operation 430 may be implemented as the following operations.

Operation 431: Determine k positions corresponding to the k first hash values in the first numerical set of the first filter as the second positions.

In some embodiments, each position in the first numerical set of the first filter may be represented by a value of a subscript. After the value of the first hash value is determined, a value of a subscript having the same value may be determined, and the second position corresponding to the first hash value in the first numerical set may be determined.

In some other embodiments, a value of a subscript at each position may be understood as a position identifier configured for identifying each position. In this case, when the value of the first hash value is determined, the value of the subscript having the same value may be determined, and a position identified by the value of the subscript having the same value is determined as the second position corresponding to the first hash value in the first numerical set.

For example, the k positions respectively corresponding to the k first hash values in the first numerical set of the first filter are determined as the second positions.

Operation 432: Determine k positions corresponding to the k second hash values in the first numerical set of the first filter as the third positions.

In some embodiments, each position in the first numerical set of the first filter may be represented by a value of a subscript. After the value of the second hash value is determined, a value of a subscript having the same value may be determined, and the position corresponding to the second hash value in the first numerical set may be determined.

In some other embodiments, a value of a subscript at each position may be understood as a position identifier configured for identifying each position. In this case, when the value of the second hash value is determined, the value of the subscript having the same value may be determined, and a position identified by the value of the subscript having the same value is determined as the third position corresponding to the second hash value in the first numerical set.

For example, the k positions respectively corresponding to the k second hash values in the first numerical set of the first filter are determined as the third positions.

In some embodiments, the determining of the second position and the third position may be performed simultaneously. This is not limited in this embodiment.

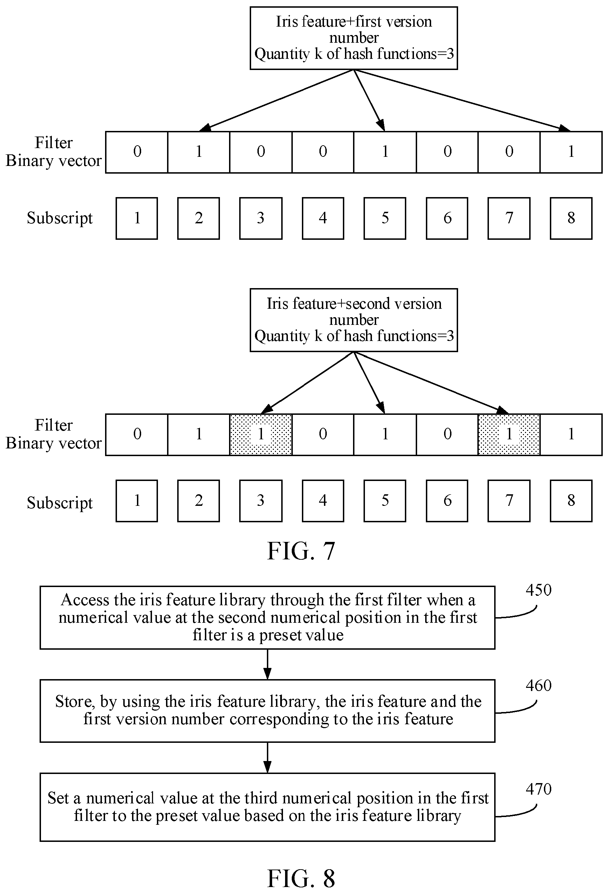

For example, refer to FIG. 7. It is assumed that a quantity k of hash functions of the first filter is 3. There are eight positions in the first filter, which are a position 1 to a position 8 respectively, and the position 1 to the position 8 are represented by a subscript 1 to a subscript 8 in sequence. It is assumed that calculation is performed by using three hash functions based on the iris feature + the first version information, to obtain first hash values: 2, 5, and 8. In other words, the second positions are determined as the position 2, the position 5, and the position 8. It is assumed that calculation is performed by using the three hash functions based on the iris feature + the second version information of the updated version, to obtain second hash values: 3, 5, and 7. In other words, the third positions are determined as the position 3, the position 5, and the position 7.

In the foregoing embodiments, the second position and the third position that correspond to the feature synchronization request are determined based on the first filter, so that whether the iris feature has the iris feature of the updated version in the iris feature library can be represented. In addition, the first filter is stored in a binary format, so that a small space is occupied, and a feature determining speed is fast, to help increase a speed of request processing.

In some embodiments, FIG. 6 is a flowchart of a feature synchronization method according to an exemplary embodiment of this application. The method further includes the following operations based on operation 420 and operation 430.

Operation 440: Determine that the iris feature has the iris feature of the updated version in the iris feature library when a value at the second position in the first filter is a preset value and a value at the third position is the preset value.

For example, when a value at a position is the preset value, it indicates that the position is occupied. The preset value may be configured based on an actual application scenario. For example, the preset value may be 1.

For example, when the value at the second position in the first filter is the preset value, it indicates that the second position is occupied, and indicates that the iris feature is not a feature of the updated version. When the value at the third position in the first filter is the preset value, it indicates that the third position is occupied, and indicates that the iris feature has the iris feature of the updated version in the iris feature library.

In some embodiments, when the second position in the first filter is occupied and the third position is occupied, it is determined that the iris feature has the iris feature of the updated version in the iris feature library. When both the second position and the third position include a plurality of positions, and when values at the plurality of positions included in the second position and the plurality of positions included in the third position are all preset values, it indicates that both the second position and the third position are occupied.

For example, refer to FIG. 7. It is assumed that the second positions are the position 2, the position 5, and the position 8, and the third positions are the position 3, the position 5, and the position 7. When the values at the positions 2, the position 5, the position 8, the position 3, the position 5, and the position 7 are all 1, it indicates that the iris feature has the iris feature of the updated version in the iris feature library.

In this embodiment, when the value at the second position is the preset value and the value at the third position is the preset value through the first filter, it is determined that the iris feature has the iris feature of the updated version in the iris feature library. A speed of this query method is fast, and additional operations such as encryption, decryption, and verification do not need to be performed. In addition, because the first filter does not store complete data of the iris feature, but only stores a value obtained through processing by using the hash function, security is high.

In conclusion, the first filter is introduced to determine, based on the first filter, whether the iris feature of the updated version exists. Therefore, a capacity occupied for feature storage in an internal memory can be greatly reduced. For example, assuming that an amount of one iris feature is four kilobytes (kb), 100 million iris features=400 000 000 kb, approximately 400 gigabytes (GB), which is very large data. When feature query is performed through the iris feature library in the cloud or in a distributed manner, and then whether the iris feature of the updated version exists is determined, occupation in an internal memory for feature storage increases greatly. It is assumed that one iris feature corresponds to one bit, and it is assumed that the quantity k of hash functions is 10. In this case, one iris feature is stored as 10 bits, and 100 million iris features are 1000 000 000 b, approximately 1 GB. Based on this, the solution of this embodiment can greatly reduce the capacity occupied for feature storage in the internal memory. When there are 10 versions of iris features, a low-configuration internal memory of the first filter can store flag data of all the iris features.

In some embodiments, FIG. 8 is a flowchart of a feature synchronization method according to an exemplary embodiment of this application. The method further includes the following operations based on operation 420 and operation 430.

Operation 450: Access the iris feature library through the first filter when a value at the second position in the first filter is a preset value.

In some embodiments, when the virtual reality device enables the feature synchronization, and when it indicates that the second position is unoccupied when the value at the second position in the first filter is the preset value, it may be determined that the iris feature is the iris feature of the updated version, and the iris feature needs to be stored in the iris feature library. In this case, the feature synchronization request may be considered as a feature upgrade request.

For example, the feature synchronization request is sent to the iris feature library through the first filter, to access the iris feature library.

Operation 460: Store, by using the iris feature library, the iris feature and the first version information corresponding to the iris feature.

For example, the iris feature and the first version information corresponding to the iris feature are stored based on the iris feature library.

Operation 470: Set a value at the third position in the first filter to the preset value based on the iris feature library.

For example, the value at the third position corresponding to the iris feature and the second version information of the updated version in the first filter is set to the preset value based on the iris feature library. The preset value may be 1, and the preset value indicates that the third position is occupied. Therefore, when the iris feature is received next time, whether the iris feature of the updated version exists can be determined.

In some embodiments, the iris feature of an original version and the flag bit corresponding to the version information of the iris feature are always stored in the first filter. When the iris feature is the iris feature of the updated version, the iris feature of the original version corresponding to the iris feature is determined based on the iris feature library, and the value at the third position corresponding to the iris feature of the original version and the second version information of the updated version in the first filter is set to the preset value.

In this embodiments, when the iris feature corresponding to the feature synchronization request is the iris feature of the updated version, the iris feature is stored in the iris feature library, and the value at the third position is set to the preset value in the first filter, to store the iris feature in the first filter. This helps the first filter to perform feature determining next time and improves accuracy of the feature determining.

In some embodiments, due to the foregoing calculation manner and a data structure of the first filter, a case that two iris features are different, but a same hash value is obtained through calculation may exist. As a result, as an amount of data of the iris feature increases, a repetition rate of the first filter gradually increases. In addition, the first filter has a characteristic that a flag cannot be deleted. Based on this, this embodiment further provides a mechanism of upgrading a gray scale of a filter.

In some embodiments, the server further includes a second filter. The first filter is an old filter that is constantly used in the foregoing embodiments, and the second filter is a new filter that is not used in the foregoing embodiments.

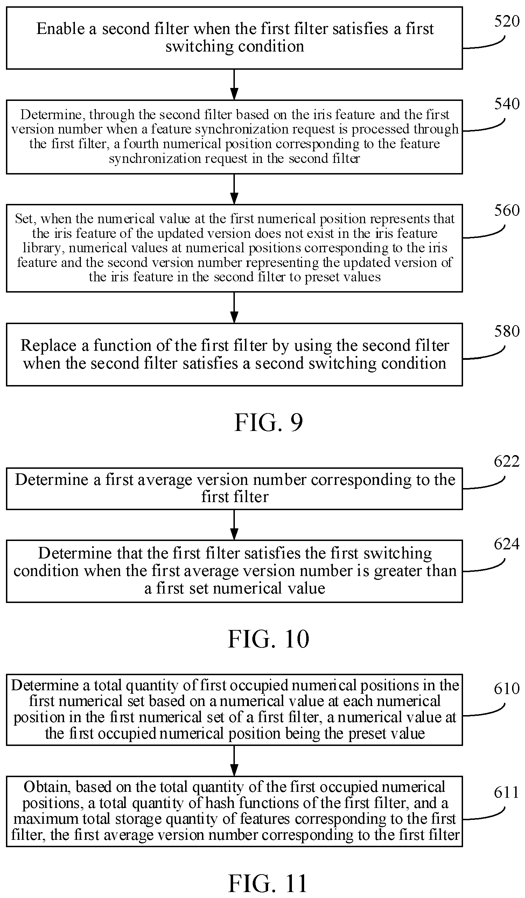

For example, FIG. 9 is a flowchart of a feature synchronization method according to an exemplary embodiment of this application. Based on that the server includes the first filter and the second filter, the method further includes the following operations.

Operation 520: Enable the second filter when the first filter satisfies a first switching condition.

The first switching condition is a condition that needs to be satisfied for switching between the first filter and the second filter, that is, a condition that needs to be satisfied by a filter being used when the filter switching is triggered. The first switching condition may be set based on an actual technical requirement. In this embodiment, the first switching condition is determined based on a version information of an iris feature corresponding to the filter being used.

The switching of the filter being used from the first filter to the second filter is a step-by-step switching process. The step-by-step switching refers to that, in a process of switching the first filter being used to the second filter, there are three stages, namely, a stage that only the first filter works, a stage that the first filter works simultaneously with the second filter, and a stage that only the second filter works. The filter being used is not directly switched from the first filter to the second filter at a time point. In other words, after the second filter is enabled, the second filter is not directly used to replace a function of the first filter. When the second filter is just enabled, the second filter is null, to be specific, a value at each position in a second numerical set in the second filter is 0.

For example, it is assumed that the first filter in this embodiment maintains iris features of N versions. In some embodiments, the first switching condition is set to that an average version information corresponding to the filter being used (specifically the first filter in this embodiment) is greater than 1, and approximates to N. N is an integer greater than 1. For example, N may be 2. Whether the average version information approximates to N may be determined by calculating a difference between the average version information and N or a ratio of the average version information to N. For example, when the difference between the average version information and N is a preset difference, it may be considered that the average version information approximates to N. The preset difference may be configured based on an actual application scenario. For example, the preset difference may be 0.2 or 0.3. For another example, when the ratio of the average version information to N is a preset ratio, it may be considered that the average version information approximates to N. The preset ratio may be configured based on an actual application scenario. For example, the preset ratio may be specifically 0.8 or 0.9.

Operation 540: Determine, through the second filter based on the iris feature and the first version information when a feature synchronization request is processed through the first filter, a fourth position corresponding to the feature synchronization request in the second filter.

Operation 560: Set, when the value at the first position represents that the iris feature of the updated version does not exist in the iris feature library, values at positions corresponding to the iris feature and the second version information representing the updated version of the iris feature in the second filter to preset values.

Operation 580: Replace a function of the first filter by using the second filter when the second filter satisfies a second switching condition.

In some embodiments, a dual-read/dual-write operation is performed on the first filter and the second filter. To be specific, when the feature synchronization request is processed through the first filter, the fourth position corresponding to the feature synchronization request in the second filter is determined through the second filter based on the iris feature and the first version information.

In some embodiments, the values at the positions corresponding to the iris feature and the second version information representing the updated version of the iris feature in the second filter are set to the preset values when the value at the first position represents that the iris feature of the updated version does not exist in the iris feature library. In addition, the value at the position corresponding to the iris feature and the second version information representing the updated version of the iris feature in the first filter also needs to be set to the preset value, that is, the value at the third position is set to the preset value.

When the value at the first position represents that the iris feature of the updated version does not exist in the iris feature library, it indicates that the feature synchronization request is actually the feature upgrade request. A flag representing that the iris feature is the iris feature of the updated version needs to be inserted into the first filter and the second filter. The flag is that the values at the positions corresponding to the iris feature and the second version information representing the updated version of the iris feature are set to the preset values respectively in the first filter and the second filter.

In some embodiments, the feature synchronization request forwarded to the first filter may still be referred to as the feature synchronization request, and the feature synchronization request forwarded to the second filter may be referred to as a non-key feature synchronization request. In other words, although the first filter and the second filter work simultaneously, whether the iris feature of the updated version exists is determined based on a result of the first filter. In this case, the second filter plays a role of verification, and a result of the second filter needs to be consistent with the result of the first filter. When the result of the second filter is not consistent with the result of the first filter, it indicates that the second filter is unstable or in error, and needs to be debugged.

The foregoing operation 540 and operation 560 may be performed simultaneously. This is not limited in this embodiment.

In some embodiments, when the second filter satisfies the second switching condition, it indicates that the second filter is stable, and the second filter may be used to replace the function of the first filter.

The second switching condition is a condition that needs to be satisfied for switching between the first filter and the second filter, that is, a condition that needs to be satisfied by an unused filter when the unused filter is triggered to be used to replace a function of the filter being used. In this embodiment, the second switching condition may be specifically a condition that needs to be satisfied by the second filter when the unused second filter is used to replace the function of the first filter being used. The second switching condition may be set based on an actual technical requirement. In this embodiment, the second switching condition is determined based on a version information of an iris feature corresponding to the unused filter. In some embodiments, the second switching condition is set to that an average version information corresponding to the unused filter is greater than 1.

In some embodiments, after the second filter is used to replace the function of the first filter, the first filter may be emptied, and the emptied first filter is used as a standby. Therefore, when the second filter satisfies the first switching condition subsequently, the filter being used is switched from the second filter to the emptied first filter. The emptied first filter may be understood as the unused filter.

In this embodiment, the first filter is switched to the second filter step-by-step. Therefore, it can be ensured that, when the second filter is stable, the first filter is switched to the second filter, so that accuracy of determining the feature synchronization subsequently can be improved.

In some embodiments, FIG. 10 is a flowchart of a feature synchronization method according to an exemplary embodiment of this application. Before operation 520, the following operations may be implemented.

Operation 622: Determine a first average version information corresponding to the first filter.

The first average version information corresponding to the first filter is an average value of version information corresponding to positions in the first numerical set in the first filter.

In some embodiments, the first average version information may alternatively be calculated periodically. To be specific, the first average version information corresponding to the first filter after the first filter works in a current period is determined.

Operation 624: Determine that the first filter satisfies the first switching condition when the first average version information is greater than a first set value.

For example, assuming that the first filter in this embodiment maintains iris features of two versions, the first switching condition may be set to that an average version information is greater than 1, that is, the first set value is 1. When the average version information is greater than 1, it is determined that the first filter satisfies the first switching condition.

In this embodiment, whether the first filter satisfies the first switching condition is determined based on the first average version information of the first filter, so that stability of continuous working of the filter can be ensured when the first filter stores as many flags of iris features as possible.

In some embodiments, FIG. 11 is a flowchart of a feature synchronization method according to an exemplary embodiment of this application. Operation 622 may be implemented as the following operations.

Operation 610: Determine a total quantity of first occupied positions in the first numerical set based on a value at each position in the first numerical set of the first filter, a value at the first occupied position being the preset value.

In some embodiments, the first filter includes a counter, configured to count a quantity of additional times of setting the preset value during each work, that is, the quantity of first occupied positions, and a value of the counter is the total quantity of first occupied positions in the first numerical set.

In some embodiments, the counter is a counter for adding an atomic, and the atomic is a technology that ensures that the counter correctly performs adding and subtracting in a high concurrency case.

Operation 611: Obtain, based on the total quantity of the first occupied positions, a total quantity of hash functions of the first filter, and a maximum total storage quantity of features corresponding to the first filter, the first average version information corresponding to the first filter.

For example, the total quantity of the first occupied positions is divided by the total quantity k of hash functions, and then divided by the maximum total storage quantity of features theoretically corresponding to the first filter, to obtain the first average version information corresponding to the first filter.

In some embodiments, in actual development, to ensure stability of the first filter, a maximum of 10% of a space of the first filter is generally used to mark the iris feature. In other words, the maximum total storage quantity of features is a set maximum total storage quantity of features divided by 10. For different services, adjustment may further be correspondingly performed based on actual stability of the first filter.

In this embodiment, the first average version information of the first filter is determined in the manner of this embodiment, so that accuracy of the calculated first average version information can be ensured, and frequent switching between the first filter and the second filter can be avoided.

In some embodiments, the second filter also includes a counter. A calculation manner of determining the average version information corresponding to the second filter is the same as the calculation manner of determining the average version information corresponding to the first filter.

In an embodiment, the feature synchronization method further includes:
determining a second average version information corresponding to the second filter; and
determining that the second filter satisfies the second switching condition when the second average version information is greater than a second set value.

The second average version information corresponding to the second filter is an average value of version information corresponding to positions in the second numerical set in the second filter.

In some embodiments, the second average version information may alternatively be calculated periodically. To be specific, the second average version information corresponding to the second filter after the second filter works in a current period is determined.

For example, assuming that the second filter in this embodiment maintains iris features of two versions, the second switching condition may be set to that the second average version information is greater than 1, that is, the second set value is 1. When the second average version information is greater than 1, it is determined that the second filter satisfies the second switching condition.

In this embodiment, whether the second filter satisfies the second switching condition is determined based on the second average version information of the second filter, so that stability of continuous working of the filter can be ensured when the second filter stores as many flags of iris features as possible.

In an embodiment, the determining the second average version information corresponding to the second filter includes:
determining a total quantity of second occupied positions in the second numerical set of the second filter based on a value at each position in the second numerical set, the value at the second occupied position being the preset value; and
obtaining, based on the total quantity of the second occupied positions, a total quantity of hash functions of the second filter, and a maximum total storage quantity of features corresponding to the second filter, the second average version information corresponding to the second filter.

In some embodiments, the second filter includes a counter, configured to count a quantity of additional times of setting the preset value during each work, that is, the quantity of second occupied positions, and a value of the counter is the total quantity of second occupied positions in the second numerical set.

In some embodiments, the counter is a counter for adding an atomic, and an atomic is a technology that ensures that the counter correctly performs adding and subtracting in a high concurrency case.

For example, the total quantity of the second occupied positions is divided by the total quantity k of the hash functions, and then divided by the maximum total storage quantity of features theoretically corresponding to the second filter, to obtain the second average version information corresponding to the second filter.

For example, it is assumed that a filter is set, to contain 10 GB of data, to be specific, data of one billion iris features. 10 hash functions enabled by the filter correspond to one billion bit positions, and a maximum of 100 million features may be marked without repetition. Assuming that each of two versions of one iris feature is hashed 10 times respectively, a maximum of 20 bits are occupied without repetition. Therefore, a quantity of versions of one iris feature is set to a total quantity of occupation divided by a total quantity of the hash functions. Generally, as the data of the iris features increases, a bit may be already occupied by data of another iris feature. As a result, an occupation speed of the filter is lower than a theoretical speed actually. Assuming that there are two versions of one iris feature, the filter marks a maximum of 50 million iris features without repetition, and more features can be marked when a repetition situation is actually included.

In this embodiment, the second average version information of the second filter is determined in the manner of this embodiment, so that accuracy of the calculated second average version information can be ensured, and the frequent switching between the first filter and the second filter can be avoided.

For example, the following entirely describes the feature synchronization method in this embodiment with reference to a specific virtual reality device and a server cluster.

In this embodiment, a forwarding server, a first filter, and an iris feature library are disposed in the server cluster. The forwarding server deploys a feature synchronization service 21. An iris feature library 31 is stored on a cloud server. The virtual reality device is a VR device 11 and a VR device 12. The VR device 11 and the VR device 12 each include a processor, configured to perform operations such as generating and initiating a feature synchronization request, and performing feature synchronization

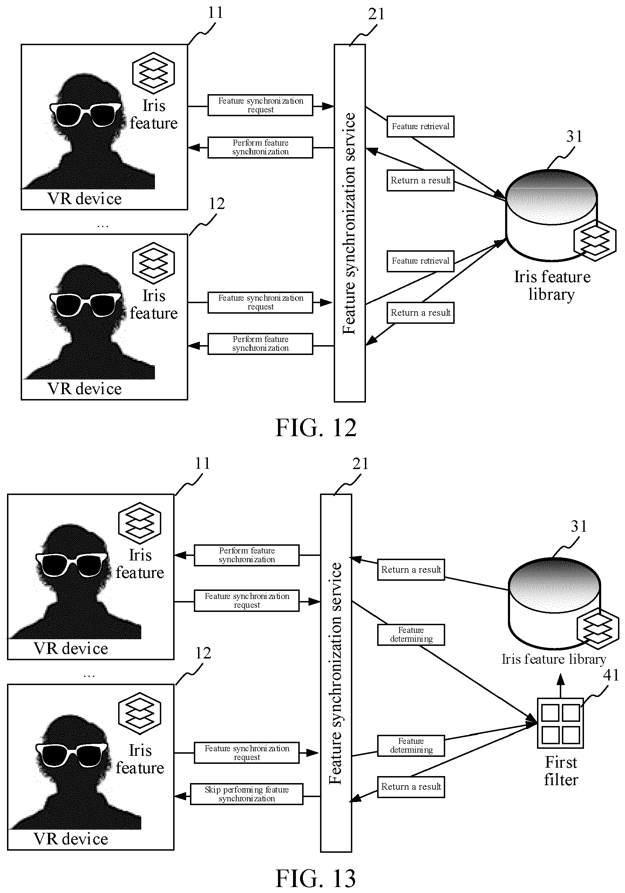

Refer to FIG. 12. In the related art, each VR device 11 or VR device 12 collects a local iris feature, and a module for managing the local iris feature in a processor initiates a feature synchronization request to a feature synchronization service 21. The feature synchronization service 21 forwards the feature synchronization request to the iris feature library 31 in a cloud for feature retrieval. A process of the feature retrieval includes determining whether the iris feature exists, whether a version of the iris feature is expired, obtaining an iris feature corresponding to the VR device, or the like. After the feature retrieval is completed, an iris feature that needs be delivered is returned to the feature synchronization service 21. The feature synchronization service 21 returns the iris feature to the VR device 11 and the VR device 12. A feature module in the processor updates and manages an iris feature of an updated version.

Referring to FIG. 13, in this embodiment, each VR device 11 or VR device 12 collects a local iris feature, and a module for managing the local iris feature in the processor initiates a feature synchronization request to a feature synchronization service 21. The feature synchronization service 21 forwards the feature synchronization request to a first filter 41 for feature determining. The feature determining includes determining whether an iris feature of an updated version exists in an iris feature library 31.

After the feature determining is completed, when the iris feature of the updated version does not exist, the first filter 41 returns the feature synchronization request to the VR device 12. In this case, the VR device 12 does not need to perform feature synchronization this time. The iris feature library 31 in a cloud does not need to traverse data in the library, so that retrieval overheads of this part of request can be saved.

After the feature determination is completed, when the iris feature of the updated version exists, the first filter 41 forwards the feature synchronization request to the iris feature library 31. The iris feature library returns the iris feature of the updated version that needs to be delivered to the feature synchronization service 21. The feature synchronization service 21 returns the iris feature of the updated version to the VR device 11. A feature module in the processor updates and manages the iris feature of the updated version.

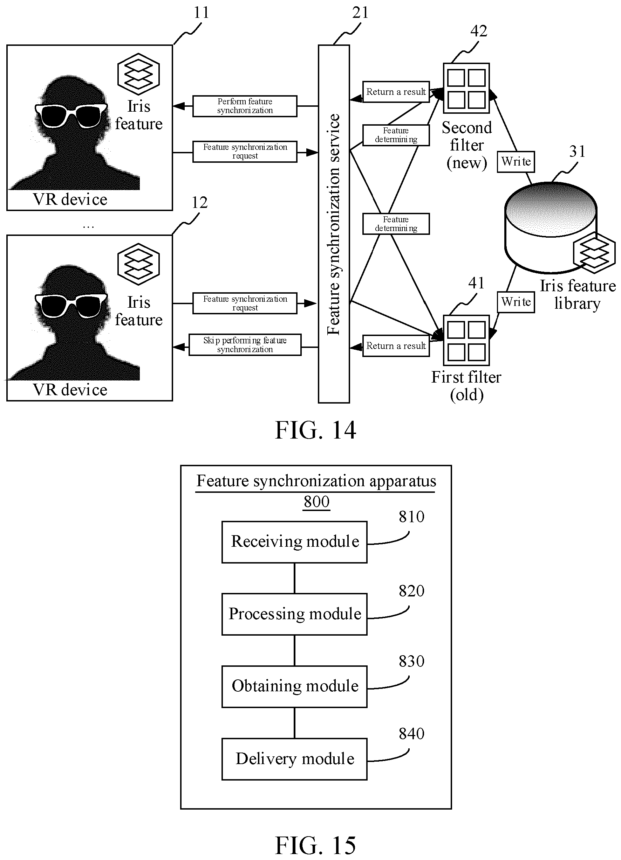

Referring to FIG. 14, this embodiment includes a first filter 41 (old) and a second filter 42 (new). The first filter 41 is the first filter 41 shown in FIG. 13. A feature synchronization method in FIG. 14 is consistent with operations of the feature synchronization method in FIG. 13. Based on FIG. 13, when the first filter 41 satisfies a first switching condition (that is, a corresponding average version information is greater than 1, and approximates to 2), the second filter 42 is enabled, and a dual-write/dual-read operation is performed step-by-step. When the second filter 42 satisfies a second switching condition (that is, a corresponding average version information is greater than 1), the first filter 41 is switched to the second filter 42, and the first filter 41 is emptied.

FIG. 15 is a block diagram of a structure of a feature synchronization apparatus according to an exemplary embodiment of this application. The feature synchronization apparatus 800 includes:
a receiving module 810, configured to receive a feature synchronization request carrying an iris feature and a first version information of the iris feature, the first version information representing a first version of the iris feature;
a processing module 820, configured to determine, through the first filter and based on the iris feature and the first version information, a first position in the first filter, a value at the first position being configured to represent whether an updated version of the iris feature exists in the iris feature library;
an obtaining module 830, configured to access iris feature library through the first filter when the value at the first position represents that the updated version of the iris feature exists in the iris feature library, and obtain the updated version of the iris feature through the iris feature library; and
a delivery module 840, configured to transmit the updated version of the iris feature to a request transmitter of the feature synchronization request, to cause the request transmitter to store the updated version of the iris feature.

In conclusion, the first filter is designed based on the feature synchronization apparatus provided in this embodiment of this application. It can be determined, based on the first filter, whether a large quantity of iris features have the iris feature of the updated versions in the iris feature library. When the iris feature of the updated version exists, the iris feature library is further accessed. Therefore, request expenditures of the iris feature library can be reduced. In addition, in the first filter, feature determining is performed based on the first position corresponding to the feature synchronization request in the first filter. This avoids a problem of an excessively large machine memory requirement caused by loading all the iris features into an internal memory of the first filter. Therefore, the solution of this embodiment of this application is used to reduce direct access to the iris feature library by a large quantity of feature synchronization requests, reduce processing costs of the iris feature library, avoid a situation in which the feature synchronization request responds slowly, and increase a speed at which the iris feature library delivers the iris feature. Therefore, a speed and efficiency of the feature synchronization are improved.

In some embodiments, the processing module 820 is configured to:
perform calculation based on the iris feature, the first version information, and a hash function of the first filter, to determine a first hash value and a second hash value that correspond to the feature synchronization request; and
determine, based on the first numerical set of the first filter, a second position corresponding to the first hash value in the first numerical set and a third position corresponding to the second hash value in the first numerical set.

In some embodiments, the processing module 820 is configured to:
perform calculation on the iris feature and the first version information by using k hash functions of the first filter, to determine k first hash values corresponding to the feature synchronization request; and
determine a second version information of the updated version based on the first version information, and perform calculation on the iris feature and the second version information by using the k hash functions of the first filter, to determine k second hash values corresponding to the feature synchronization request, where
k is an integer greater than 0.

In some embodiments, the processing module is further configured to obtain a version information interval configured for updating a version information, superimpose the version information interval and the first version information, and determine the second version information of the updated version.

In some embodiments, the processing module 820 is configured to:
determine k positions corresponding to the k first hash values in the first numerical set of the first filter as the second positions; and
determine k positions corresponding to the k second hash values in the first numerical set of the first filter as the third positions.

In some embodiments, the processing module 820 is configured to:
determine that the iris feature has the iris feature of the updated version in the iris feature library when a value at the second position in the first filter is a preset value and a value at the third position is the preset value.

In some embodiments, the feature synchronization apparatus further includes a storage module 850, and the storage module 850 is configured to:
access the iris feature library through the first filter when the value at the second position in the first filter is not a preset value;
store the iris feature and the first version information by using the iris feature library; and
set a value at the third position in the first filter to the preset value based on the iris feature library.

In some embodiments, the feature synchronization apparatus further includes a second filter. The feature synchronization apparatus further includes a switching module 860, and the switching module 860 is configured to:
enable the second filter when the first filter satisfies a first switching condition;
determine, through the second filter based on the iris feature and the first version information when the feature synchronization request is processed through the first filter, a fourth position corresponding to the feature synchronization request in the second filter;
set, when the value at the first position represents that the iris feature of the updated version does not exist in the iris feature library, values at positions corresponding to the iris feature and the second version information representing the updated version of the iris feature in the second filter to preset values; and
replace a function of the first filter by using the second filter when the second filter satisfies a second switching condition.

In some embodiments, the switching module 860 is configured to:
determine a first average version information corresponding to the first filter; and
determine that the first filter satisfies the first switching condition when the first average version information is greater than a first set value.

In some embodiments, the switching module 860 is configured to:
determine a total quantity of first occupied positions in the first numerical set based on a value at each position in the first numerical set of the first filter, a value at the first occupied position being the preset value; and
obtain, based on the total quantity of the first occupied positions, a total quantity of hash functions of the first filter, and a maximum total storage quantity of features corresponding to the first filter, the first average version information corresponding to the first filter.

In some embodiments, the switching module 860 is configured to:
determine a second average version information corresponding to the second filter; and
determine that the second filter satisfies the second switching condition when the second average version information is greater than a second set value.

In some embodiments, the switching module 860 is configured to:
determine a total quantity of second occupied positions in a second numerical set of the second filter based on a value at each position in the second numerical set, the value at the second occupied position being the preset value; and
obtain, based on the total quantity of the second occupied positions, a total quantity of hash functions of the second filter, and a maximum total storage quantity of features corresponding to the second filter, the second average version information corresponding to the second filter.

In some embodiments, embodiments of this application provide a computer device. The computer device is a server cluster, and the server cluster includes at least two servers. Each server includes a processor and a memory, the memory having computer-readable instructions stored therein, and the processor being configured to execute the computer-readable instructions in the memory to implement the feature synchronization method provided in the foregoing method embodiments.

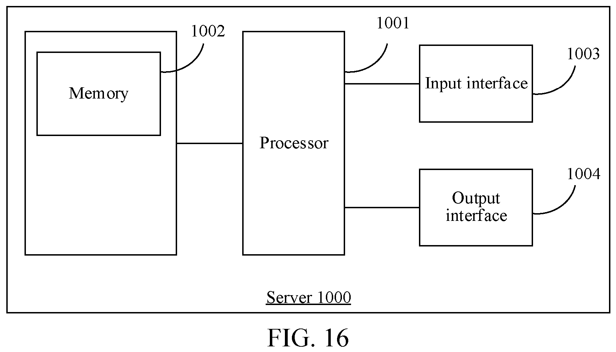

For example, FIG. 16 is a block diagram of a structure of a server according to an exemplary embodiment of this application.

Generally, the server 1000 includes a processor 1001 and a memory 1002.

The processor 1001 may include one or more processing cores, such as a 4-core processor and an 8-core processor. The processor 1001 may be implemented in at least one hardware form of a digital signal processor (DSP), a field-programmable gate array (FPGA), and a programmable logic array (PLA). The processor 1001 may also include a main processor and a co-processor. The main processor is a processor configured to process data in an awake state, and is also referred to as a central processing unit (CPU). The co-processor is a low power consumption processor configured to process the data in a standby state. In some embodiments, the processor 1001 may be integrated with a graphics processing unit (GPU). The GPU is configured to render and draw content that needs to be displayed on a display. In some embodiments, the processor 1001 may further include an artificial intelligence (AI) processor. The AI processor is configured to process a computing operation related to machine learning.

The memory 1002 may include one or more computer-readable storage media. The computer-readable storage medium may be non-transient. The memory 1002 may also include a high-speed random access memory, a nonvolatile memory, such as one or more disk storage devices and flash storage devices. In some embodiments, the non-transitory computer-readable storage medium in the memory 1002 is configured to store at least one computer-readable instruction. The at least one computer-readable instruction is configured to be executed by the processor 1001 to implement the feature synchronization method provided in the method embodiments of this application.

In some embodiments, the server 1000 further exemplarily includes an input interface 1003 and an output interface 1004. The processor 1001, the memory 1002, the input interface 1003 and the output interface 1004 may be connected through a bus or a signal cable. Each peripheral device may be connected to the input interface 1003 and the output interface 1004 through the bus, the signal cable, or a circuit board. The input interface 1003 and the output interface 1004 may be configured to connect the at least one peripheral device related to input/output (I/O) to the processor 1001 and the memory 1002. In some embodiments, the processor 1001, the memory 1002, the input interface 1003 and the output interface 1004 are integrated on the same chip or circuit board. In some other embodiments, any one or two of the processor 1001, the memory 1002, the input interface 1003 and the output interface 1004 may be implemented on the single chip or the circuit board. This is not limited in the embodiments of this application.

A person skilled in the art may understand that the structure shown in FIG. 16 constitutes no limitation on the server 1000, and the server may include more or fewer components than those shown in the figure, or some components may be combined, or a different component deployment may be used.

In an exemplary embodiment, embodiments of this application provide a chip. The chip includes a programmable logic circuit and/or program instructions. When the chip is run on a computer device, the chip is configured to implement the feature synchronization method provided in the foregoing method embodiments.

Embodiments of this application provide a computer-readable storage medium, the computer-readable storage medium having computer-readable instructions stored therein, and the computer-readable instructions being loaded and executed by a processor to implement the feature synchronization method according to the foregoing method embodiments.

Embodiments of this application provide a computer program product or computer-readable instructions. The computer program product or the computer-readable instruction includes the computer-readable instructions. The computer-readable instruction is stored in a computer-readable storage medium. A processor obtains the computer-readable instructions from the computer-readable storage medium, so that the processor loads and executes the computer-readable instruction to implement the feature synchronization method according to the foregoing method embodiments.

Sequence numbers of the foregoing embodiments of this application are merely for description, and do not indicate superiority or inferiority of the embodiments.

A person of ordinary skill in the art may understand that all or some of operations of the foregoing embodiments may be implemented by hardware, or may be implemented by a program instructing relevant hardware. The program may be stored in a computer-readable storage medium. The computer-readable storage medium may be a read-only memory, a magnetic disk, an optical disc, or the like.

A person skilled in the art needs to be aware of that in the one or more embodiments, the functions described in the embodiments of this application may be implemented by hardware, software, firmware, or a combination or the above. When implemented by using software, the functions can be stored in a computer readable medium or can be used as one or more instructions or code in a computer readable medium for transferring. The computer-readable medium includes a computer storage medium and a communication medium. The communication medium includes any medium that facilitates transfer of computer-readable instructions from one place to another. The storage medium may be any available medium accessible to a general-purpose or dedicated computer.

Technical features of foregoing embodiments may be combined in different manners to form other embodiments. For ease of description, not all possible combinations of the technical features in embodiments are described. However, as long as there is no contradiction in the combinations of these technical features, it is to be considered to be within the scope of this application.

The foregoing embodiments only describe several implementations of this application, and the descriptions are specific and detailed, but is not to be construed as limitations to the patent scope of this invention. Therefore, the protection scope of this application shall be subject to the attached claims.

## Claims

1. A feature synchronization method, performed by a computer device being provided with a first filter and an iris feature library, the method comprising:
receiving a feature synchronization request carrying an iris feature and a first version information of the iris feature, the first version information representing a first version of the iris feature (320);
determining, through the first filter and based on the iris feature and the first version information, a first position in the first filter, a value at the first position being configured to represent whether an updated version of the iris feature exists in the iris feature library (340);
accessing the iris feature library through the first filter when the value at the first position represents that the updated version of the iris feature exists in the iris feature library, and obtaining the updated version of the iris feature through the iris feature library (360); and
transmitting the updated version of the iris feature to a request transmitter of the feature synchronization request, to cause the request transmitter to store the updated version of the iris feature (380).

2. The method according to claim 1, wherein the determining, through the first filter and based on the iris feature and the first version information, a first position in the first filter comprises:
performing calculation based on the iris feature, the first version information, and a hash function of the first filter, to determine a first hash value and a second hash value that correspond to the feature synchronization request; and
determining, based on a first numerical set of the first filter, a second position corresponding to the first hash value in the first numerical set and a third position corresponding to the second hash value in the first numerical set.

3. The method according to claim 2, wherein the performing calculation based on the iris feature, the first version information, and a hash function of the first filter, to determine a first hash value and a second hash value that correspond to the feature synchronization request comprises:
performing calculation on the iris feature and the first version information by using k hash functions of the first filter, to determine k first hash values corresponding to the feature synchronization request; and
determining a second version information of the updated version based on the first version information, and performing calculation on the iris feature and the second version information by using the k hash functions of the first filter, to determine k second hash values corresponding to the feature synchronization request, wherein
k is an integer greater than 0.

4. The method according to claim 3, wherein the determining a second version information of the updated version based on the first version information comprises:
obtaining a version information interval configured for updating a version information, superimposing the version information interval and the first version information, and determining the second version information of the updated version.

5. The method according to any one of claims 2 to 4, wherein the determining, based on a first numerical set of the first filter, a second position corresponding to the first hash value in the first numerical set and a third position corresponding to the second hash value in the first numerical set comprises:
determining k positions corresponding to the k first hash values in the first numerical set of the first filter as the second positions; and
determining k positions corresponding to the k second hash values in the first numerical set of the first filter as the third positions.

6. The method according to any one of claims 2 to 5, wherein the method further comprises:
determining that the iris feature has the iris feature of the updated version in the iris feature library when a value at the second position in the first filter is a preset value and a value at the third position is the preset value.

7. The method according to any one of claims 2 to 5, wherein the method further comprises:
accessing the iris feature library through the first filter when a value at the second position in the first filter is not a preset value;
storing the iris feature and the first version information by using the iris feature library; and
setting a value at the third position in the first filter to the preset value based on the iris feature library.

8. The method according to any one of claims 1 to 7, wherein the computer device further comprises a second filter, and the method further comprises:
enabling the second filter when the first filter satisfies a first switching condition;
determining, through the second filter based on the iris feature and the first version information when the feature synchronization request is processed through the first filter, a fourth position corresponding to the feature synchronization request in the second filter;
setting, when the value at the first position represents that the iris feature of the updated version does not exist in the iris feature library, values at positions corresponding to the iris feature and the second version information representing the updated version of the iris feature in the second filter to preset values; and
replacing a function of the first filter by using the second filter when the second filter satisfies a second switching condition.

9. The method according to claim 8, wherein the method further comprises:
determining a first average version information corresponding to the first filter; and
determining that the first filter satisfies the first switching condition when the first average version information is greater than a first set value.

10. The method according to claim 9, wherein the determining a first average version information corresponding to the first filter comprises:
determining a total quantity of first occupied positions in the first numerical set based on a value at each position in the first numerical set of the first filter, a value at the first occupied position being the preset value; and
obtaining, based on the total quantity of the first occupied positions, a total quantity of hash functions of the first filter, and a maximum total storage quantity of features corresponding to the first filter, the first average version information corresponding to the first filter.

11. The method according to claim 8, wherein the method further comprises:
determining a second average version information corresponding to the second filter; and
determining that the second filter satisfies the second switching condition when the second average version information is greater than a second set value.

12. The method according to claim 11, wherein the determining a second average version information corresponding to the second filter comprises:
determining a total quantity of second occupied positions in a second numerical set of the second filter based on a value at each position in the second numerical set, the value at the second occupied position being the preset value; and
obtaining, based on the total quantity of the second occupied positions, a total quantity of hash functions of the second filter, and a maximum total storage quantity of features corresponding to the second filter, the second average version information corresponding to the second filter.

13. A computer device, comprising a processor and a memory, the memory having computer-readable instructions stored therein, and the computer-readable instructions being loaded and executed by the processor to implement the feature synchronization method according to any one of claims 1 to 12.

14. A computer-readable storage medium, the computer-readable storage medium having computer-readable instructions stored therein, and the computer-readable instructions being loaded and executed by a processor to implement the feature synchronization method according to any one of claims 1 to 12.

15. A computer program product, comprising computer-readable instructions, the computer-readable instructions being stored in a computer-readable storage medium, and a processor obtaining the computer-readable instructions from the computer-readable storage medium, to enable the processor to load and execute the computer-readable instructions to implement the feature synchronization method according to any one of claims 1 to 12.

## Patentansprüche

1. Merkmal-Synchronisierungsverfahren, das von einer Computervorrichtung ausgeführt wird, die mit einem ersten Filter und einer Iris-Merkmal-Bibliothek versehen ist, wobei das Verfahren umfasst: Empfangen einer Merkmal-Synchronisierungsanforderung, die ein Iris-Merkmal und eine erste Versionsinformation des Iris-Merkmals trägt, wobei die erste Versionsinformation eine erste Version des Iris-Merkmals repräsentiert (320); Bestimmen, durch den ersten Filter und basierend auf dem Iris-Merkmal und der ersten Versionsinformation, einer ersten Position in dem ersten Filter, wobei ein Wert an der ersten Position konfiguriert ist, um zu repräsentieren, ob eine aktualisierte Version des Iris-Merkmals in der Iris-Merkmal-Bibliothek existiert (340); Zugreifen auf die Iris-Merkmal-Bibliothek durch den ersten Filter, wenn der Wert an der ersten Position repräsentiert, dass die aktualisierte Version des Iris-Merkmals in der Iris-Merkmal-Bibliothek existiert, und Erhalten der aktualisierten Version des Iris-Merkmals durch die Iris-Merkmal-Bibliothek (360); und Übertragen der aktualisierten Version des Iris-Merkmals an einen Anforderungsübermittler der Merkmal-Synchronisierungsanforderung, um den Anforderungsübermittler zu veranlassen, die aktualisierte Version des Iris-Merkmals zu speichern (380).

2. Verfahren nach Anspruch 1, wobei das Bestimmen, durch den ersten Filter und basierend auf dem Iris-Merkmal und der ersten Versionsinformation, einer ersten Position in dem ersten Filter umfasst: Durchführen einer Berechnung basierend auf dem Iris-Merkmal, der ersten Versionsinformation und einer Hash-Funktion des ersten Filters, um einen ersten Hash-Wert und einen zweiten Hash-Wert zu bestimmen, die der Merkmal-Synchronisierungsanforderung entsprechen; und Bestimmen, basierend auf einer ersten numerischen Menge des ersten Filters, einer zweiten Position, die dem ersten Hash-Wert in der ersten numerischen Menge entspricht, und einer dritten Position, die dem zweiten Hash-Wert in der ersten numerischen Menge entspricht.

3. Verfahren nach Anspruch 2, wobei das Durchführen einer Berechnung basierend auf dem Iris-Merkmal, der ersten Versionsinformation und einer Hash-Funktion des ersten Filters, um einen ersten Hash-Wert und einen zweiten Hash-Wert zu bestimmen, die der Merkmal-Synchronisierungsanforderung entsprechen, umfasst: Durchführen einer Berechnung auf dem Iris-Merkmal und der ersten Versionsinformation unter Verwendung von k Hash-Funktionen des ersten Filters, um k erste Hash-Werte zu bestimmen, die der Merkmal-Synchronisierungsanforderung entsprechen; und Bestimmen einer zweiten Versionsinformation der aktualisierten Version basierend auf der ersten Versionsinformation und Durchführen einer Berechnung auf dem Iris-Merkmal und der zweiten Versionsinformation unter Verwendung der k Hash-Funktionen des ersten Filters, um k zweite Hash-Werte zu bestimmen, die der Merkmal-Synchronisierungsanforderung entsprechen, wobei k eine ganze Zahl größer als 0 ist.

4. Verfahren nach Anspruch 3, wobei das Bestimmen einer zweiten Versionsinformation der aktualisierten Version basierend auf der ersten Versionsinformation umfasst: Erhalten eines Versionsinformationsintervalls, das für die Aktualisierung einer Versionsinformation konfiguriert ist, Überlagern des Versionsinformationsintervalls und der ersten Versionsinformation und Bestimmen der zweiten Versionsinformation der aktualisierten Version.

5. Verfahren nach einem der Ansprüche 2 bis 4, wobei das Bestimmen, basierend auf einer ersten numerischen Menge des ersten Filters, einer zweiten Position, die dem ersten Hash-Wert in der ersten numerischen Menge entspricht, und einer dritten Position, die dem zweiten Hash-Wert in der ersten numerischen Menge entspricht, umfasst: Bestimmen von k Positionen, die den k ersten Hash-Werten in der ersten numerischen Menge des ersten Filters entsprechen, als die zweiten Positionen; und Bestimmen von k Positionen, die den k zweiten Hash-Werten in der ersten numerischen Menge des ersten Filters entsprechen, als die dritten Positionen.

6. Verfahren nach einem der Ansprüche 2 bis 5, wobei das Verfahren ferner umfasst: Bestimmen, dass das Iris-Merkmal das Iris-Merkmal der aktualisierten Version in der Iris-Merkmal-Bibliothek aufweist, wenn ein Wert an der zweiten Position in dem ersten Filter ein voreingestellter Wert ist und ein Wert an der dritten Position der voreingestellte Wert ist.

7. Verfahren nach einem der Ansprüche 2 bis 5, wobei das Verfahren ferner umfasst: Zugreifen auf die Iris-Merkmal-Bibliothek durch den ersten Filter, wenn ein Wert an der zweiten Position in dem ersten Filter nicht ein voreingestellter Wert ist; Speichern des Iris-Merkmals und der ersten Versionsinformation unter Verwendung der Iris-Merkmal-Bibliothek; und Setzen eines Werts an der dritten Position in dem ersten Filter auf den voreingestellten Wert basierend auf der Iris-Merkmal-Bibliothek.

8. Verfahren nach einem der Ansprüche 1 bis 7, wobei die Computervorrichtung ferner einen zweiten Filter umfasst und das Verfahren ferner umfasst: Aktivieren des zweiten Filters, wenn der erste Filter eine erste Umschaltbedingung erfüllt; Bestimmen, durch den zweiten Filter basierend auf dem Iris-Merkmal und der ersten Versionsinformation, wenn die Merkmal-Synchronisierungsanforderung durch den ersten Filter verarbeitet wird, einer vierten Position, die der Merkmal-Synchronisierungsanforderung in dem zweiten Filter entspricht; Setzen, wenn der Wert an der ersten Position repräsentiert, dass das Iris-Merkmal der aktualisierten Version nicht in der Iris-Merkmal-Bibliothek existiert, der Werte an Positionen, die dem Iris-Merkmal und der zweiten Versionsinformation entsprechen, die die aktualisierte Version des Iris-Merkmals in dem zweiten Filter repräsentiert, auf voreingestellte Werte; und Ersetzen einer Funktion des ersten Filters unter Verwendung des zweiten Filters, wenn der zweite Filter eine zweite Umschaltbedingung erfüllt.

9. Verfahren nach Anspruch 8, wobei das Verfahren ferner umfasst: Bestimmen einer ersten durchschnittlichen Versionsinformation, die dem ersten Filter entspricht; und Bestimmen, dass der erste Filter die erste Umschaltbedingung erfüllt, wenn die erste durchschnittliche Versionsinformation größer als ein erster eingestellter Wert ist.

10. Verfahren nach Anspruch 9, wobei das Bestimmen einer ersten durchschnittlichen Versionsinformation, die dem ersten Filter entspricht, umfasst: Bestimmen einer Gesamtanzahl von ersten belegten Positionen in der ersten numerischen Menge basierend auf einem Wert an jeder Position in der ersten numerischen Menge des ersten Filters, wobei ein Wert an der ersten belegten Position der voreingestellte Wert ist; und Erhalten, basierend auf der Gesamtanzahl der ersten belegten Positionen, einer Gesamtanzahl von Hash-Funktionen des ersten Filters und einer maximalen Gesamtspeicheranzahl von Merkmalen, die dem ersten Filter entsprechen, der ersten durchschnittlichen Versionsinformation, die dem ersten Filter entspricht.

11. Verfahren nach Anspruch 8, wobei das Verfahren ferner umfasst: Bestimmen einer zweiten durchschnittlichen Versionsinformation, die dem zweiten Filter entspricht; und Bestimmen, dass der zweite Filter die zweite Umschaltbedingung erfüllt, wenn die zweite durchschnittliche Versionsinformation größer als ein zweiter eingestellter Wert ist.

12. Verfahren nach Anspruch 11, wobei das Bestimmen einer zweiten durchschnittlichen Versionsinformation, die dem zweiten Filter entspricht, umfasst: Bestimmen einer Gesamtanzahl von zweiten belegten Positionen in einer zweiten numerischen Menge des zweiten Filters basierend auf einem Wert an jeder Position in der zweiten numerischen Menge, wobei der Wert an der zweiten belegten Position der voreingestellte Wert ist; und Erhalten, basierend auf der Gesamtanzahl der zweiten belegten Positionen, einer Gesamtanzahl von Hash-Funktionen des zweiten Filters und einer maximalen Gesamtspeicheranzahl von Merkmalen, die dem zweiten Filter entsprechen, der zweiten durchschnittlichen Versionsinformation, die dem zweiten Filter entspricht.

13. Computervorrichtung, umfassend einen Prozessor und einen Speicher, wobei der Speicher darin gespeicherte computerlesbare Anweisungen aufweist und die computerlesbaren Anweisungen durch den Prozessor geladen und ausgeführt werden, um das Merkmal-Synchronisierungsverfahren nach einem der Ansprüche 1 bis 12 zu implementieren.

14. Computerlesbares Speichermedium, wobei das computerlesbare Speichermedium darin gespeicherte computerlesbare Anweisungen aufweist und die computerlesbaren Anweisungen durch einen Prozessor geladen und ausgeführt werden, um das Merkmal-Synchronisierungsverfahren nach einem der Ansprüche 1 bis 12 zu implementieren.

15. Computerprogrammprodukt, umfassend computerlesbare Anweisungen, wobei die computerlesbaren Anweisungen in einem computerlesbaren Speichermedium gespeichert sind und ein Prozessor die computerlesbaren Anweisungen von dem computerlesbaren Speichermedium erhält, um den Prozessor zu veranlassen, die computerlesbaren Anweisungen zu laden und auszuführen, um das Merkmal-Synchronisierungsverfahren nach einem der Ansprüche 1 bis 12 zu implementieren.

## Revendications

1. Procédé de synchronisation de caractéristiques, exécuté par un dispositif informatique qui est pourvu d'un premier filtre et d'une bibliothèque de caractéristiques d'iris, le procédé comprenant : la réception d'une demande de synchronisation de caractéristiques portant une caractéristique d'iris et une première information de version de la caractéristique d'iris, la première information de version représentant une première version de la caractéristique d'iris (320) ; la détermination, par le biais du premier filtre et sur la base de la caractéristique d'iris et de la première information de version, d'une première position dans le premier filtre, une valeur à la première position étant configurée pour représenter si une version mise à jour de la caractéristique d'iris existe dans la bibliothèque de caractéristiques d'iris (340) ; l'accès à la bibliothèque de caractéristiques d'iris par le biais du premier filtre lorsque la valeur à la première position représente que la version mise à jour de la caractéristique d'iris existe dans la bibliothèque de caractéristiques d'iris, et l'obtention de la version mise à jour de la caractéristique d'iris par le biais de la bibliothèque de caractéristiques d'iris (360) ; et la transmission de la version mise à jour de la caractéristique d'iris à un émetteur de demande de la demande de synchronisation de caractéristiques, afin d'amener l'émetteur de demande à stocker la version mise à jour de la caractéristique d'iris (380).

2. Procédé selon la revendication 1, dans lequel la détermination, par le biais du premier filtre et sur la base de la caractéristique d'iris et de la première information de version, d'une première position dans le premier filtre comprend : l'exécution d'un calcul sur la base de la caractéristique d'iris, de la première information de version et d'une fonction de hachage du premier filtre, pour déterminer une première valeur de hachage et une deuxième valeur de hachage qui correspondent à la demande de synchronisation de caractéristiques ; et la détermination, sur la base d'un premier ensemble numérique du premier filtre, d'une deuxième position correspondant à la première valeur de hachage dans le premier ensemble numérique et d'une troisième position correspondant à la deuxième valeur de hachage dans le premier ensemble numérique.

3. Procédé selon la revendication 2, dans lequel l'exécution d'un calcul sur la base de la caractéristique d'iris, de la première information de version et d'une fonction de hachage du premier filtre, pour déterminer une première valeur de hachage et une deuxième valeur de hachage qui correspondent à la demande de synchronisation de caractéristiques comprend : l'exécution d'un calcul sur la caractéristique d'iris et la première information de version en utilisant k fonctions de hachage du premier filtre, pour déterminer k premières valeurs de hachage correspondant à la demande de synchronisation de caractéristiques ; et la détermination d'une deuxième information de version de la version mise à jour sur la base de la première information de version, et l'exécution d'un calcul sur la caractéristique d'iris et la deuxième information de version en utilisant les k fonctions de hachage du premier filtre, pour déterminer k deuxièmes valeurs de hachage correspondant à la demande de synchronisation de caractéristiques, dans lequel k est un entier supérieur à 0.

4. Procédé selon la revendication 3, dans lequel la détermination d'une deuxième information de version de la version mise à jour sur la base de la première information de version comprend : l'obtention d'un intervalle d'information de version qui est configuré pour mettre à jour une information de version, la superposition de l'intervalle d'information de version et de la première information de version, et la détermination de la deuxième information de version de la version mise à jour.

5. Procédé selon l'une quelconque des revendications 2 à 4, dans lequel la détermination, sur la base d'un premier ensemble numérique du premier filtre, d'une deuxième position correspondant à la première valeur de hachage dans le premier ensemble numérique et d'une troisième position correspondant à la deuxième valeur de hachage dans le premier ensemble numérique comprend : la détermination de k positions correspondant aux k premières valeurs de hachage dans le premier ensemble numérique du premier filtre en tant que deuxièmes positions ; et la détermination de k positions correspondant aux k deuxièmes valeurs de hachage dans le premier ensemble numérique du premier filtre en tant que troisièmes positions.

6. Procédé selon l'une quelconque des revendications 2 à 5, dans lequel le procédé comprend en outre : la détermination que la caractéristique d'iris a la caractéristique d'iris de la version mise à jour dans la bibliothèque de caractéristiques d'iris lorsqu'une valeur à la deuxième position dans le premier filtre est une valeur prédéfinie et qu'une valeur à la troisième position est la valeur prédéfinie.

7. Procédé selon l'une quelconque des revendications 2 à 5, dans lequel le procédé comprend en outre : l'accès à la bibliothèque de caractéristiques d'iris par le biais du premier filtre lorsqu'une valeur à la deuxième position dans le premier filtre n'est pas une valeur prédéfinie ; le stockage de la caractéristique d'iris et de la première information de version en utilisant la bibliothèque de caractéristiques d'iris ; et la définition d'une valeur à la troisième position dans le premier filtre à la valeur prédéfinie sur la base de la bibliothèque de caractéristiques d'iris.

8. Procédé selon l'une quelconque des revendications 1 à 7, dans lequel le dispositif informatique comprend en outre un deuxième filtre, et le procédé comprend en outre : l'activation du deuxième filtre lorsque le premier filtre satisfait à une première condition de commutation ; la détermination, par le biais du deuxième filtre sur la base de la caractéristique d'iris et de la première information de version lorsque la demande de synchronisation de caractéristiques est traitée par le biais du premier filtre, d'une quatrième position qui correspond à la demande de synchronisation de caractéristiques dans le deuxième filtre ; la définition, lorsque la valeur à la première position représente que la caractéristique d'iris de la version mise à jour n'existe pas dans la bibliothèque de caractéristiques d'iris, des valeurs aux positions correspondant à la caractéristique d'iris et à la deuxième information de version représentant la version mise à jour de la caractéristique d'iris dans le deuxième filtre à des valeurs prédéfinies ; et le remplacement d'une fonction du premier filtre en utilisant le deuxième filtre lorsque le deuxième filtre satisfait à une deuxième condition de commutation.

9. Procédé selon la revendication 8, dans lequel le procédé comprend en outre : la détermination d'une première information de version moyenne qui correspond au premier filtre ; et la détermination que le premier filtre satisfait à la première condition de commutation lorsque la première information de version moyenne est supérieure à une première valeur définie.

10. Procédé selon la revendication 9, dans lequel la détermination d'une première information de version moyenne qui correspond au premier filtre comprend : la détermination d'une quantité totale de premières positions occupées dans le premier ensemble numérique sur la base d'une valeur à chaque position dans le premier ensemble numérique du premier filtre, une valeur à la première position occupée étant la valeur prédéfinie ; et l'obtention, sur la base de la quantité totale des premières positions occupées, d'une quantité totale de fonctions de hachage du premier filtre, et d'une quantité totale maximale de stockage de caractéristiques qui correspond au premier filtre, de la première information de version moyenne qui correspond au premier filtre.

11. Procédé selon la revendication 8, dans lequel le procédé comprend en outre : la détermination d'une deuxième information de version moyenne qui correspond au deuxième filtre ; et la détermination que le deuxième filtre satisfait à la deuxième condition de commutation lorsque la deuxième information de version moyenne est supérieure à une deuxième valeur définie.

12. Procédé selon la revendication 11, dans lequel la détermination d'une deuxième information de version moyenne qui correspond au deuxième filtre comprend : la détermination d'une quantité totale de deuxièmes positions occupées dans un deuxième ensemble numérique du deuxième filtre sur la base d'une valeur à chaque position dans le deuxième ensemble numérique, la valeur à la deuxième position occupée étant la valeur prédéfinie ; et l'obtention, sur la base de la quantité totale des deuxièmes positions occupées, d'une quantité totale de fonctions de hachage du deuxième filtre, et d'une quantité totale maximale de stockage de caractéristiques qui correspond au deuxième filtre, de la deuxième information de version moyenne qui correspond au deuxième filtre.

13. Dispositif informatique, comprenant un processeur et une mémoire, la mémoire ayant des instructions lisibles par ordinateur qui y sont stockées, et les instructions lisibles par ordinateur étant chargées et exécutées par le processeur pour mettre en œuvre le procédé de synchronisation de caractéristiques selon l'une quelconque des revendications 1 à 12.

14. Support de stockage lisible par ordinateur, le support de stockage lisible par ordinateur ayant des instructions lisibles par ordinateur qui y sont stockées, et les instructions lisibles par ordinateur étant chargées et exécutées par un processeur pour mettre en œuvre le procédé de synchronisation de caractéristiques selon l'une quelconque des revendications 1 à 12.

15. Produit-programme d'ordinateur, comprenant des instructions lisibles par ordinateur, les instructions lisibles par ordinateur étant stockées dans un support de stockage lisible par ordinateur, et un processeur obtenant les instructions lisibles par ordinateur à partir du support de stockage lisible par ordinateur, pour permettre au processeur de charger et d'exécuter les instructions lisibles par ordinateur pour mettre en œuvre le procédé de synchronisation de caractéristiques selon l'une quelconque des revendications 1 à 12.
